(19) Europäisches Patentamt
European Patent Office
Office européen des brevets

(11) **EP 2 900 464 B1**

(12) **FASCICULE DE BREVET EUROPEEN**

(45) Date de publication et mention de la délivrance du brevet:
**16.11.2016 Bulletin 2016/46**

(21) Numéro de dépôt: **13766010.6**

(22) Date de dépôt: **19.09.2013**

(51) Int Cl.:
***B29D 30/46*** *(2006.01)*

(86) Numéro de dépôt international:
**PCT/EP2013/069427**

(87) Numéro de publication internationale:
**WO 2014/048822 (03.04.2014 Gazette 2014/14)**

(54) **PROCEDE DE COUPE D'UNE BANDE DE PRODUIT DE RENFORT POUR PNEUMATIQUE COMPRENANT DES FILS FAISANT UN ANGLE AVEC LA DIRECTION LONGITUDINALE DU PRODUIT.**

VERFAHREN ZUM SCHNEIDEN EINES STREIFENS EINES REIFENVERSTÄRKUNGSPRODUKTS MIT DRÄHTEN IN EINEM WINKEL ZUR LÄNGSRICHTUNG DES PRODUKTS.

METHOD FOR CUTTING A STRIP OF TYRE REINFORCING PRODUCT COMPRISING WIRES AT AN ANGLE WITH RESPECT TO THE LONGITUDINAL DIRECTION OF THE PRODUCT.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2012 FR 1259140**

(43) Date de publication de la demande:
**05.08.2015 Bulletin 2015/32**

(73) Titulaires:
• **Compagnie Générale des Etablissements Michelin**
  **63000 Clermont-Ferrand (FR)**
• **MICHELIN Recherche et Technique S.A.**
  **1763 Granges-Paccot (CH)**

(72) Inventeurs:
• **DEBOEUF, Michel**
  **F-63040 Clermont-Ferrand Cedex 9 (FR)**
• **DUBOIS, Clément**
  **F-63040 Clermont-Ferrand Cedex 9 (FR)**
• **DUCROS, Thierry**
  **F-63040 Clermont-Ferrand Cedex 9 (FR)**
• **RAVAT, Stéphane**
  **F-63040 Clermont-Ferrand Cedex 9 (FR)**

(74) Mandataire: **Noel, Luminita**
  **Manufacture Française**
  **Des Pneumatiques Michelin**
  **DGD/PI F35/Ladoux**
  **23, Place des Carmes-Déchaux**
  **63040 Clermont-Ferrand Cedex 9 (FR)**

(56) Documents cités:
**EP-A2- 0 447 273     US-A- 4 857 123**
**US-A- 5 029 502     US-B1- 6 592 704**

EP 2 900 464 B1

**Description**

L'invention concerne le domaine de la fabrication des pneumatiques, et plus particulièrement les opérations d'assemblage au cours desquelles on procède à la jonction ou à l'aboutage de produits en caoutchouc comprenant des fils de renfort.

Ces produits sont formés d'un pré-assemblage complexe de bandes continues de caoutchouc superposées les unes sur les autres selon des géométries de recouvrement déterminées. Ces pré assemblages sont réalisés dans le but de réduire le temps de l'assemblage final de l'ébauche d'un pneumatique en réduisant le nombre de produits élémentaires à déposer par enroulement sur le tambour d'assemblage.

De manière connue on pré assemble par exemple des bandes continues de profilés destinés à former le flanc et la zone d'accrochage d'un pneumatique.

D'autres pré assemblages peuvent contenir un nombre plus important de profilés élémentaires tel que par exemple une gomme de renfort des gommes de bordage et, dans le cas spécifique de l'invention, une nappe de renfort comprenant des fils de renfort, textiles ou métalliques, enrobés dans du caoutchouc, et faisant un angle donné avec la direction longitudinale de la nappe. En règle générale, la nappe de renfort ne se superpose qu'en partie sur les profilés en caoutchouc.

Ces produits pré assemblés sont destinés, par exemple, à former la zone basse d'un pneumatique poids lourd, pour laquelle des précautions particulières sont prises pour protéger cette zone des agressions mécaniques et thermiques.

Lors de l'assemblage final, on prélève un tronçon de longueur donné dans la bande continue pré assemblée formée de plusieurs profilés ou renforts élémentaires et on dépose ce tronçon par enroulement autour du tambour d'assemblage de forme généralement cylindrique.

Il convient donc que la longueur du tronçon de produits pré assemblés corresponde très précisément à la circonférence du tambour d'assemblage au niveau de la position axiale qui lui est assignée.

Toutefois, la coupe de ces assemblages complexes nécessite une attention particulière.

En premier lieu, on observe en effet, lors de la découpe de la nappe de renfort qui se fait obligatoirement en faisant circuler un moyen de coupe entre deux fils, selon l'angle formé par ces fils avec la direction longitudinale de la bande, que la ligne de circulation du moyen de coupe passant entre deux fils ne correspond pas avec la ligne de coupe théorique déterminée après la mesure de la longueur théorique souhaitée du tronçon de produits pré assemblés à déposer sur le moyen d'assemblage.

En second lieu, il est souvent souhaitable de couper à l'aide d'un moyen de coupe distinct, et selon un angle différent, la partie des profilés en caoutchouc qui n'est pas superposée sur la nappe de renfort, pour éviter par exemple la pose et le raccordement de fronts avant et arrière formant un angle faible avec la direction longitudinale.

On est alors confronté à la détermination précise du point de raccordement de deux lignes de coupe de manière à obtenir une géométrie maitrisée des fronts avant et arrière du tronçon de produits complexes pré assemblés en perspective de l'opération d'aboutage de ces deux fronts à réaliser sur le tambour d'assemblage.

Cette difficulté est amplifiée par les variations géométriques des produits pré assemblés dans les tolérances de fabrication admises, lesdites variations pouvant tout à la fois concerner les angles des fils comme les largeurs des nappes de renfort ou des profilés en caoutchouc.

Le document US 4857123 - A divulgue un procédé de coupage d'une telle bande en caoutchouc. La ligne de coupe est définie à l'aide de calculs regardant l'angle de coupe et la correction de la longueur de la bande. Le document EP 447273 - A propose la détermination de la ligne de coupe par des algorithmes relatifs à la correction de la longueur de la bande. Le document US 5029502 - A propose la détermination de la ligne de coupe par des algorithmes relatifs à l'angle formé entre la direction des renforts et la direction longitudinale de la bande. Le document US 6592704 - B se réfère à la préparation des fronts avant et arrière d'un tronçon de produit complexe pré-assemblé, en vue de l'opération d'aboutage de ces deux fronts à réaliser sur le tambour d'assemblage.

L'invention a pour objet d'apporter une solution originale à l'ensemble de ces problèmes.

Plus particulièrement, le procédé selon l'invention prévoit les étapes au cours desquelles

- on fait circuler un moyen de coupe entre deux fils de la nappe de renfort,
- on mesure l'écart entre la ligne de coupe réelle et une ligne de coupe théorique, et on détermine le point d'intersection de la ligne de coupe réelle avec une ligne longitudinale de référence placée sur la bande,
- on décale longitudinalement la ligne de coupe réelle de la partie des profilés en caoutchouc non superposés à la nappe de renfort par rapport à la ligne de coupe théorique, de manière à ce que ladite ligne de coupe réelle rencontre la ligne longitudinale de référence au point d'intersection de la ligne de coupe réelle de la nappe de renfort avec la dite ligne longitudinale de référence et on coupe les profilés en caoutchouc non superposés à la nappe de renfort le long de ladite ligne de coupe réelle.

On s'assure de la sorte que le point de rencontre entre les lignes de coupe de la nappe de renfort et celle des profilés en caoutchouc qui ne sont pas superposés à la nappe de renfort qui peut être distinct du point de rencontre théorique, est disposé à un endroit connu.

Connaissant la valeur de correction, il est alors possible de couper les profilés de manière à ce que le front de coupe soit le plus propre possible, mais également de tenir compte de cette correction pour adapter en conséquence le dispositif de pose à longueur du tronçon de bande sur le tambour d'assemblage.

Pour déterminer avec précision l'emplacement de la ligne de référence, préalablement à la coupe, on positionne la bande dans le repère du dispositif de coupe.

De préférence, pour couper la nappe de renfort, on utilise un moyen de coupe apte à apprécier la position de la ligne de coupe réelle.

De préférence, le moyen de coupe de la nappe de renfort peut comprendre une roulette de coupe de forme circulaire, orientable selon l'angle formé par les fils avec la direction longitudinale de la bande, et libre de déplacement dans la direction de son axe de rotation.

De préférence, on détermine l'écart entre la ligne de coupe réelle et la ligne de coupe théorique en mesurant en au moins deux points distincts la distance entre ces deux lignes. Il suffit pour cela de mesurer la position de la lame de coupe dans le référentiel du dispositif de coupe pour obtenir les données pertinentes permettant de déterminer la trajectoire de la lame de coupe par rapport à la ligne de référence.

De préférence, on poursuit la circulation du moyen de coupe entre les fils au-delà du point d'intersection de la ligne de coupe, réelle et de la ligne longitudinale de référence d'une distance de valeur faible donnée, de manière à faciliter le détachement de tronçon de bande après la découpe de la partie des profilés de caoutchouc non superposée à la nappe de renfort.

La ligne de coupe de la partie des profilés en caoutchouc non superposée à la nappe de renfort peut faire un angle avec la direction longitudinale égal à l'angle ou différent de l'angle des fils de la nappe de renfort.

Dans cette deuxième hypothèse, la ligne de coupe de la partie des profilés en caoutchouc non superposée à la nappe de renfort peut de préférence faire un angle droit avec la direction longitudinale.

Préférentiellement, préalablement à la coupe, on déplace la bande sous le moyen de coupe d'une longueur donnée de consigne, de manière à former, après la coupe, un tronçon de bande destiné à être déposé par enroulement sur un tambour d'assemblage de circonférence donnée.

Préférentiellement, on ajuste la longueur de consigne du tronçon de bande de sorte qu'elle soit égale à la circonférence du tambour d'assemblage diminuée d'un décalage longitudinal maximum donné.

Cela permet, quelle que soit la valeur de l'ajustage longitudinal de la coupe, de poser le tronçon de bande en tension sur le tambour d'assemblage, et d'ajuster de manière connue ladite tension de pose en fonction de la longueur de consigne augmentée de la valeur du décalage longitudinal de la ligne de coupe réelle.

La description qui suit s'appuie sur les figures 1 à 4 dans lesquelles :

- la figure 1 représente une vue schématique en perspective d'un premier type de bande formée de produits pré assemblés

- la figure 2 représente une vue schématique en perspective d'un deuxième type de bande formée de produits pré assemblés

- la figure 3 représente une vue schématique en coupe et en vue de dessus de la bande de produit pré assemblés.

- La figure 4 représente une vue schématique en perspective d'un moyen de coupe apte à mettre en oeuvre le procédé selon l'invention,

- la figure 5 représente une vue géométrique servant de base au calcul du décalage.

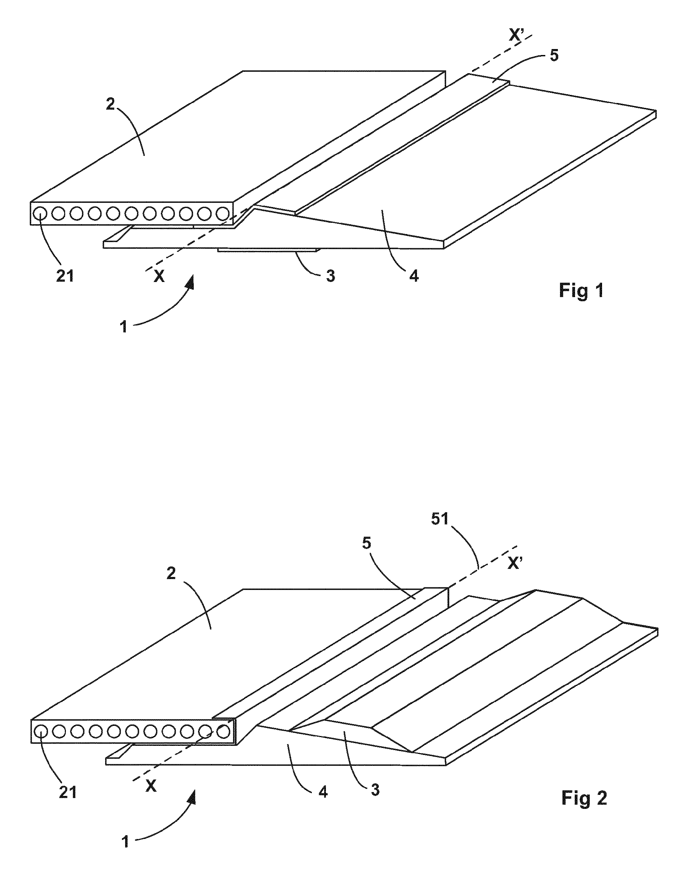

La bande de produit 1 représentée à la figure 1 comprend une nappe de renfort 2 formée de fil 21 enrobés dans du caoutchouc et faisant un angle donné avec la direction longitudinale de la bande matérialisée par la ligne en pointillée XX'. La nappe de renfort est assemblée avec des profilés en caoutchouc 3, 4, 5. On observe que, dans le sens transversal de la bande, la nappe de renfort ne recouvre pas totalement les produits profilés en caoutchouc 3, 4 et 5.

La figure 2 représente un assemblage similaire dans lequel la nappe de renfort 2 comporte, sur une de ses lisières, une gomme de bordage 5.

La ligne XX' représente également la ligne longitudinale de référence qui peut être positionnée transversalement à une distance connue des deux bords latéraux de la bande de produit. Pour des raisons pratiques évidentes, on considère souvent que seule une des bordures latérales de la bande sert de référence à partir de laquelle on va positionner la ligne longitudinale de référence XX' qui va servir de base à l'opération de coupe exposée dans les paragraphes qui vont suivre.

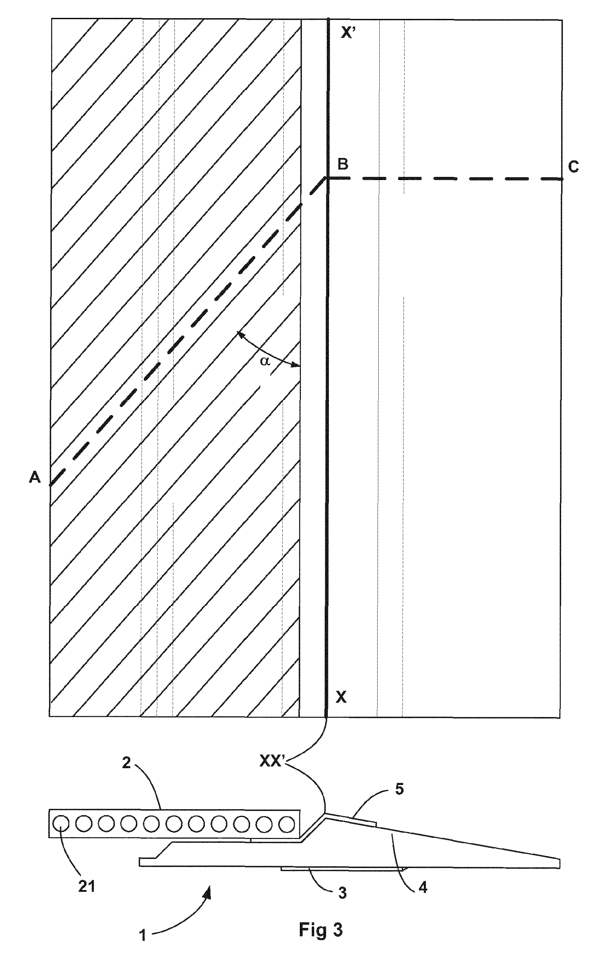

La figure 3 permet d'illustrer en vue de dessus, le trajet théorique de la ligne de coupe de la bande formé d'une première partie AB de coupe de la nappe de renfort, passant idéalement entre deux fils et formant donc un angle $\alpha$ égal à l'inclinaison des fils avec la direction longitudinale de la bande, suivie d'une seconde partie BC de coupe de la partie des profilés en caoutchouc qui ne se superposent pas avec la nappe de renfort. Le point B, situé sur la ligne de référence XX', constitue le point de rencontre entre les deux parties de la ligne de coupe ABC.

On fera observer ici que cette seconde partie de la ligne de coupe peut faire avec la direction longitudinale de la bande un angle quelconque, différent de l'angle $\alpha$ formé par les fils. De manière usuelle cet angle peut être égal à 90° comme dans le cas illustré à la figure 3, mais il peut tout aussi bien être égal à l'angle $\alpha$, ce qui revient à définir une ligne de coupe rectiligne faisant un angle $\alpha$ avec la direction longitudinale. Toutefois, ce second cas de figure reste limité à un angle $\alpha$ relativement élevé, de manière à limiter la longueur du front d'aboutage.

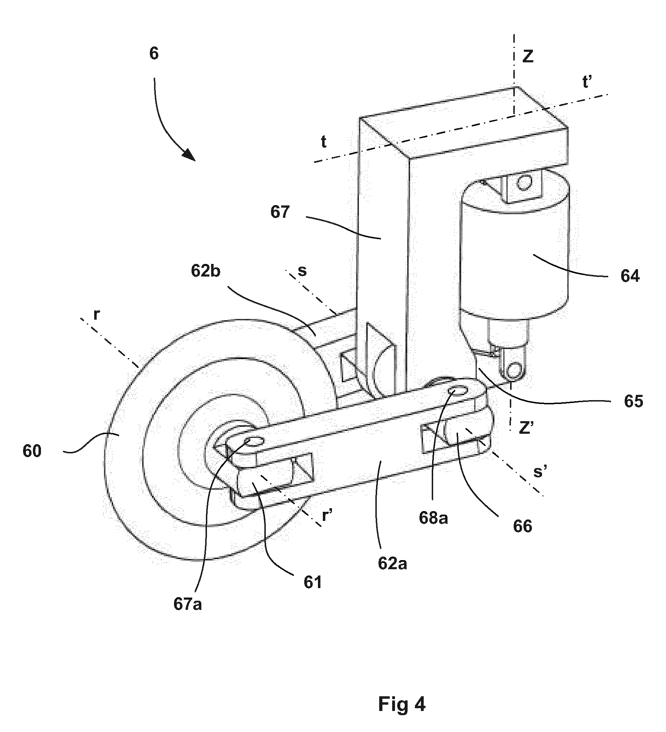

La figure 4 permet d'illustrer un moyen de coupe apte à évaluer la position réelle de la ligne de coupe lorsque celle-ci ne correspond pas avec la ligne de coupe théorique.

Ce type de couteau flottant, permettant d'adapter la ligne de coupe réelle en passant entre les fils, est décrit de manière détaillée dans la publication US 4 857 123 ou encore dans la publication WO 2011/076558 dont un des modes de réalisation 6 est reproduit à la figure 4.

Selon ce mode de réalisation, la roulette de coupe 60 tourne librement sur un axe 61 dont l'orientation rr' est sensiblement parallèle au plan de de la nappe de renfort lorsque le dispositif de coupe est en fonctionnement.

L'axe 61 de la roulette de coupe 60 est relié à un support d'entrainement 67, se déplaçant sensiblement dans une direction tt' parallèle à la direction théorique des fils, par un cadre articulé comprenant deux biellettes 62a et 62b reliées par des articulations, 67a, 67b (non visible), 68a, 68b (non visible), chacune aux deux extrémités d'un axe 66 solidaire du support 67. La direction ss' de l'axe 66 est parallèle à la direction rr' de l'axe 61 d'une part, et aux deux extrémités de l'axe 61 de la roulette de coupe 60 d'autre part.

Les axes des biellettes, respectivement 67a, 67b, 68a, 68b sont sensiblement parallèles à la direction ZZ' perpendiculaire au plan de la nappe de renfort, de sorte que le déplacement de la roulette de coupe 60 dans la direction rr' s'accompagne d'un pivotement des biellettes autour des articulations 67a, 67b, 68a, 68b.

La force d'application de la roulette sur la nappe provient de l'action d'un vérin 64 sur un bras 65 fixé à l'axe 66.

Lorsque les biellettes 62a et 62b sont parallèles, le plan de la roulette 60 reste perpendiculaire à la direction rr', et sensiblement parallèle à la direction tt'.

On s'arrange, lors du fonctionnement du moyen de coupe, pour faire correspondre la trajectoire tt' du support d'entrainement avec la ligne de coupe théorique AB, et il suffit d'enregistrer, à l'aide de capteurs, les déplacements de la roulette de coupe dans la direction rr' pour apprécier la trajectoire réelle de la roulette lorsqu'elle se déplace entre deux fils selon une trajectoire réelle éventuellement distincte de la trajectoire théorique.

Pour couper les profilés en caoutchouc qui ne sont pas superposés à la nappe de renfort, et à défaut de bloquer dans la direction rr' les mouvements de la roulette de coupe qui n'est plus guidée par les fils entre lesquels elle circulait auparavant, il est préférable d'utiliser un moyen de coupe distinct, tel qu'une lame de coupe dont la longueur est égale à la longueur du front de coupe.

A cet égard, en choisissant un angle de 90° on limite la longueur de la lame de coupe utilisée pour réaliser la coupe le long du segment B'C'.

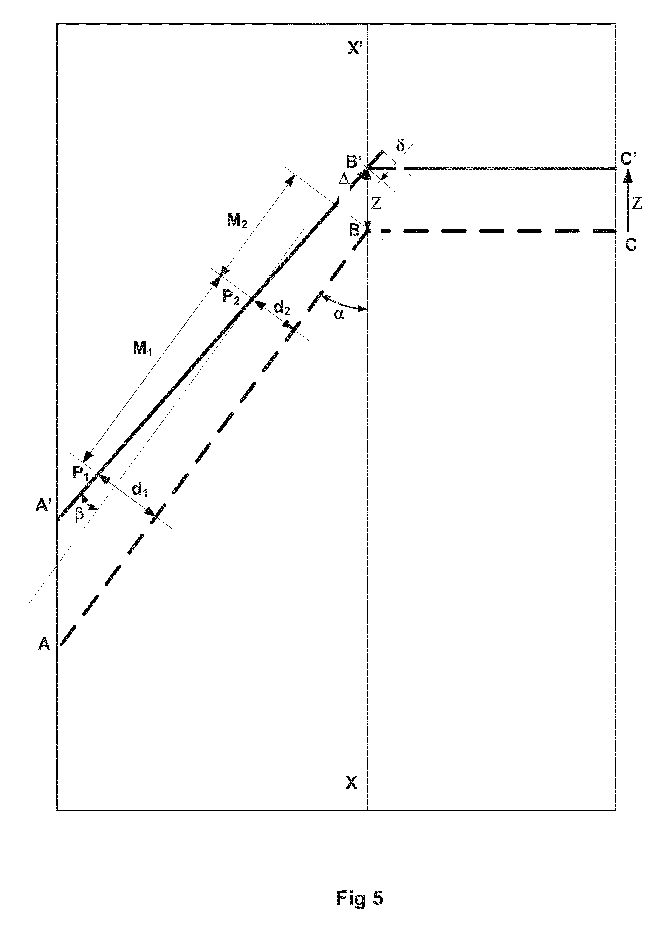

La figure 5 permet d'illustrer un moyen d'évaluation de la trajectoire réelle A'B'C' du moyen de coupe.

En préambule à l'évaluation de la trajectoire réelle, il convient de positionner la bande de manière précise dans le repère du dispositif de coupe. A cet effet on alignera par exemple le coté de référence de la bande sur une bordure fixe liée au châssis sur lequel ledit dispositif de coupe est monté. La détermination de l'emplacement de la ligne de coupe théorique ABC se fait alors en déroulant la bande d'une longueur de consigne L donnée, correspondant sensiblement, après la prise en compte des ajustements qui seront exposés dans ce qui suit, au développement de la surface de réception du tambour d'assemblage sur lequel le tronçon de bande que l'on cherche à obtenir est destiné à être posé. On peut également améliorer la précision de ce positionnement en disposant des moyens de détection du front de coupe avant de la bande.

La ligne de référence XX' est alors positionnée avec précision par rapport au référentiel du dispositif de coupe. De manière pratique on s'arrange pour que cette ligne de référence XX' soit située légèrement au-delà du bord intérieur de la nappe de renfort de manière à s'assurer que la lame de coupe des profilés en caoutchouc non superposés à la nappe de renfort ne vienne pas heurter l'extrémité d'un fil de la nappe.

Comme cela a été évoqué ci-dessus, on commence alors la coupe de la bande en faisant pénétrer le moyen de coupe 6 dans la nappe de renfort. La lame de coupe circule alors entre deux fils de renfort selon une trajectoire A'B' qui n'est pas forcement superposée à la trajectoire théorique AB.

Cette trajectoire peut être décalée longitudinalement mais également différer d'un angle β de la trajectoire théorique calée sur l'angle α des fils 21 de la nappe de renfort 2.

Lorsque la roulette atteint le point $P_1$ situé à une distance $M_1+M_2$ du point A, on évalue alors l'écart $d_1$ entre la trajectoire théorique et la trajectoire réelle. Et lorsque la roulette passe au point $P_2$, distant de $M_2$ du point A, on mesure la distance $d_2$ séparant la trajectoire théorique de la trajectoire réelle.

Il est alors aisé, à l'aide de calculs géométriques simples, de déterminer le trajet supplémentaire Δ à faire subir à la roulette pour qu'elle rencontre la ligne de référence XX'

$$ Tg\beta = \frac{d_1 - d_2}{M_1} $$

$$ \Delta = \frac{1}{\cos\beta} \times \frac{M_1 d_2 + M_2 d_2 - M_2 d_1}{d_1 - d_2 + M_1 tg\alpha} $$

On peut également prolonger le cheminement du moyen de coupe au-delà du point B' sur une distance δ généralement faible, de 4 ou 5 millimètres par exemple, pour s'assurer que les lignes de coupe A'B' et B'C' sont franches et permettent un détachement sans effort du tronçon de bande.

On calcule également la distance Z entre le point B et le point B'.

$$Z = \frac{1}{\cos\alpha} \times \frac{M_1 d_2 + M_2 d_2 - M_2 d_1}{d_1 - d_2 + M_1 tg\alpha}$$

Cette distance Z sert à déterminer le positionnement de la ligne de coupe B'C' des profilés en caoutchouc qui ne sont pas superposés à la nappe de renfort.

On déplace en conséquence le second moyen de coupe de la valeur du décalage Z, et on coupe le reste de la bande.

Le mode de détermination des valeurs $\Delta$ et Z exposé ci-dessus n'est en rien limitatif pour l'application de la méthode faisant l'objet de l'invention, et les alternatives pour arriver à un résultat similaire sont nombreuses dés lors que les déplacements de la lame de coupe dans le repère du dispositif de coupe peuvent être connus de manière précise.

Il est utile de remarquer que le fait de déplacer la ligne de coupe de la valeur de décalage Z la ligne de coupe réelle A'B'C' par rapport à la ligne de coupe ABC, modifie de façon substantielle la longueur L qui avait été choisie pour le tronçon de bande destiné à être déposé sur le tambour d'assemblage.

Aussi, le procédé peut prévoir de mettre à profit la connaissance précise de ce décalage Z à chaque opération de coupe pour ajuster en conséquence la tension de pose dudit tronçon. A cet effet, on peut déterminer de manière expérimentale une valeur $Z_{max}$ correspondant à la valeur maximale de la correction Z observée sur un nombre d'échantillons significatif.

On choisit alors de couper le tronçon de bande d'une longueur L égale à la circonférence de pose du tambour d'assemblage réduite de la longueur $Z_{max}$. La longueur réelle à poser sera alors égale à la longueur L majorée de la correction réelle Z. Le total de ces deux longueurs restant légèrement inférieur au développement de la surface de réception, cela autorise une pose en tension du tronçon de la bande de produits pré assemblés. Connaissant la valeur de Z, et donc la longueur réelle dudit tronçon, il est alors facile de déterminer le coefficient d'allongement à faire subir à la bande pendant le tour de pose sur le tambour d'assemblage.

**Revendications**

1. Procédé de coupe à longueur d'une bande formée de produits pré assemblés comprenant un ou plusieurs profilés en caoutchouc (3, 4, 5) superposés en partie sur une nappe de renfort (2) constituée de fils (21) enrobés dans du caoutchouc et faisant un angle ($\alpha$) avec la direction longitudinale de la bande, au cours duquel on exécute les étapes suivantes :

   - on fait circuler un moyen de coupe (6) entre deux fils de la nappe de renfort,
   - on mesure l'écart entre la ligne de coupe réelle (A'B'C') et une ligne de coupe théorique (ABC), et on détermine le point d'intersection de la ligne de coupe réelle (B') avec une ligne longitudinale de référence (XX') placée sur la bande,
   - on décale longitudinalement (Z) la ligne de coupe réelle (B'C') de la partie des profilés en caoutchouc non superposés à la nappe de renfort par rapport à la ligne de coupe théorique (BC), de manière à ce que ladite ligne de coupe réelle (B'C') rencontre la ligne longitudinale de référence (XX') au point d'intersection (B') de la ligne de coupe réelle de la nappe de renfort (A'B') avec la dite ligne longitudinale de référence (XX'), et on coupe les profilés en caoutchouc non superposés à la nappe de renfort le long de ladite ligne de coupe réelle.

2. Procédé selon la revendication 1, dans lequel, préalablement à la coupe, on positionne la bande dans le repère du dispositif de coupe de manière à ce que la ligne longitudinale de référence (XX') de la bande soit disposée à un emplacement connu.

3. Procédé selon l'une des revendications 1 ou 2, dans lequel, pour couper la nappe de renfort, on utilise un moyen de coupe (6) apte à apprécier la position de la ligne de coupe.

4. Procédé selon la revendication 3, dans lequel le moyen de coupe de la nappe de renfort comprend une roulette de coupe de forme circulaire (60), orientable selon l'angle formé par les fils avec la direction longitudinale de la bande ($\alpha$), et libre de déplacement dans la direction de son axe de rotation (rr').

5. Procédé selon l'une des revendications 1 à 4, dans lequel on détermine l'écart entre la ligne de coupe réelle (A'B') et la ligne de coupe théorique (AB) en mesurant en au moins deux points distincts ($P_1$, $P_2$) la distance ($d_1$, $d_2$) entre ces deux lignes.

6. Procédé selon l'une des revendications 1 à 5, dans lequel on poursuit la circulation du moyen de coupe entre les fils au-delà du point d'intersection (B') de la ligne de coupe, réelle (A'B') et de la ligne longitudinale de référence (XX') d'une distance de valeur faible donnée ($\delta$), de manière à faciliter le détachement de tronçon de bande après la découpe de la partie des profilés de caoutchouc non superposée à la nappe de renfort.

7. Procédé selon l'une des revendications 1 à 6, dans lequel dans lequel la ligne de coupe (B'C') de la partie des profilés en caoutchouc non superposée à la nappe de renfort fait un angle avec la direction longitudinale égal à l'angle ($\alpha$) des fils de la nappe de renfort (2).

8.  Procédé selon l'une des revendications 1 à 6, dans lequel la ligne de coupe (B'C') de la partie des profilés en caoutchouc non superposée à la nappe de renfort fait un angle avec la direction longitudinale différent de l'angle ($\alpha$) des fils de la nappe de renfort.

9.  Procédé selon la revendication 8, dans lequel la ligne de coupe de la partie des profilés en caoutchouc non superposée à la nappe de renfort fait un angle droit avec la direction longitudinale de la bande.

10.  Procédé selon l'une des revendications 1 à 9, dans lequel préalablement à la coupe, on déplace la bande sous le moyen de coupe d'une longueur donnée de consigne (L), de manière à former, après la coupe, un tronçon de bande destiné à être déposé par enroulement sur un tambour d'assemblage de circonférence donnée.

11.  Procédé selon la revendication 10, dans lequel on ajuste la longueur de consigne (L) du tronçon de bande de sorte qu'elle soit égale à la circonférence du tambour d'assemblage diminuée d'un décalage longitudinal maximum ($Z_{max}$) donné.

12.  Procédé de pose d'un tronçon de bande formée de produits pré assemblés comprenant un ou plusieurs profilés en caoutchouc (3, 4, 5) et une nappe de renfort (2) constituée de fils (21) enrobés dans du caoutchouc et faisant un angle ($\alpha$) avec la direction longitudinale de la bande coupé selon un procédé selon l'une des revendications 10 ou 11, dans lequel on ajuste la tension de pose du tronçon de bande sur le tambour d'assemblage en fonction d'une longueur de consigne (L) augmentée de la valeur du décalage longitudinal (Z) de la ligne de coupe réelle.

**Patentansprüche**

1.  Verfahren zum längsgerichteten Schneiden eines Streifens, der aus zuvor zusammengesetzten Produkten ausgebildet wird, die ein oder mehrere Profil (e) aus Kautschuk (3, 4, 5) umfassen, die teilweise auf einer Verstärkungsschicht (2) übereinandergelegt sind, die aus Fasern (21) besteht, die mit Kautschuk ummantelt sind und einen Winkel ($\alpha$) mit der Längsrichtung des Streifens bilden, wobei im Verlauf des Verfahrens die nachfolgenden Schritte ausgeführt werden:

    - Drehen eines Schneidemittels (6) zwischen zwei Fasern der Verstärkungsschicht,
    - Messen des Abstands zwischen der tatsächlichen Schneidelinie (A'B'C') und einer theoretischen Schneidelinie (ABC), und Bestimmen des Schnittpunkts der tatsächlichen Schneidelinie (B') mit einer längsgerichteten Referenzlinie (XX'), die auf dem Streifen platziert ist,
    - Versetzen (Z) der tatsächlichen Schneidelinie (B'C') des Bereichs der Profile aus Kautschuk, die an der Verstärkungsschicht nicht übereinanderliegen, im Verhältnis zu der theoretischen Schneidelinie (BC) dergestalt längsgerichtet, dass die tatsächliche Schneidelinie (B'C') auf die längsgerichtete Referenzlinie (XX') in dem Schnittpunkt (B') der tatsächlichen Schneidelinie der Verstärkungsschicht (A'B') mit der längsgerichteten Referenzlinie (XX') trifft, und Schneiden der Profile aus Kautschuk, die an der Verstärkungsschicht nicht übereinanderliegen, entlang der tatsächlichen Schneidelinie.

2.  Verfahren nach Anspruch 1, wobei, vor dem Schnitt, der Streifen in der Markierung der Schneidevorrichtung dergestalt positioniert wird, dass die längsgerichtete Referenzlinie (XX') des Streifens an einer bekannten Stelle angeordnet ist.

3.  Verfahren nach einem der Ansprüche 1 oder 2, wobei, um die Verstärkungsschicht zu schneiden, ein Schneidemittel (6) verwendet wird, das in der Lage ist, die Position der Schneidelinie zu berücksichtigen.

4.  Verfahren nach Anspruch 3, wobei das Schneidemittel der Verstärkungsschicht ein Schneiderad kreisförmiger Gestalt (60) umfasst, das gemäß dem Winkel geneigt werden kann, der durch die Fasern mit der Längsrichtung des Streifens ($\alpha$) gebildet wird, und das in die Richtung seiner Drehachse (rr') frei verschoben werden kann.

5.  Verfahren nach einem der Ansprüche 1 bis 4, wobei der Abstand zwischen der tatsächlichen Schneidelinie (A'B') und der theoretischen Schneidelinie (AB) bestimmt wird, indem die Entfernung ($d_1$, $d_2$) zwischen diesen beiden Linien an mindestens zwei unterschiedlichen Punkten ($P_1$, $P_2$) gemessen wird.

6.  Verfahren nach einem der Ansprüche 1 bis 5, wobei die Drehung des Schneidemittels zwischen den Fasern über den Schnittpunkt (B') der tatsächlichen Schneidelinie (A'B') und der längsgerichteten Referenzlinie (XX') um eine Entfernung mit geringem gegebenem Wert ($\delta$) hinausgehend dergestalt fortgesetzt wird, dass das Abtrennen des Streifenabschnittes nach dem Abschneiden des Bereichs der Profile aus Kautschuk, die an der Verstärkungsschicht nicht übereinanderliegen, vereinfacht wird.

7.  Verfahren nach einem der Ansprüche 1 bis 6, wobei die Schneidelinie (B'C') des Bereichs der Profile aus Kautschuk, die an der Verstärkungsschicht nicht übereinanderliegen, einen Winkel mit der Längsrichtung bildet, der gleich dem Winkel ($\alpha$) der Fasern der Verstärkungsschicht (2) ist.

8. Verfahren nach einem der Ansprüche 1 bis 6, wobei die Schneidelinie (B'C') des Bereichs der Profile aus Kautschuk, die an der Verstärkungsschicht nicht übereinanderliegen, einen Winkel mit der Längsrichtung bildet, der sich von dem Winkel ($\alpha$) der Fasern der Verstärkungsschicht unterscheidet.

9. Verfahren nach dem Anspruch 8, wobei die Schneidelinie des Bereichs der Profile aus Kautschuk, die an der Verstärkungsschicht nicht übereinanderliegen, einen rechten Winkel mit der Längsrichtung des Streifens bildet.

10. Verfahren nach einem der Ansprüche 1 bis 9, wobei vor dem Schneiden, der Streifen unter das Schneidemittel um eine gegebene Solllänge (L) dergestalt verschoben wird, dass nach dem Schneiden, ein Streifenabschnitt ausgebildet wird, der dazu bestimmt ist, durch Aufrollen auf eine Montagerolle gegebenen Umfangs abgelegt zu werden.

11. Verfahren nach Anspruch 10, wobei die Solllänge (L) des Streifenabschnittes dergestalt angepasst wird, dass sie gleich dem Umfang der Montagerolle abzüglich eines gegebenen maximalen Längenversatzes ($Z_{max}$) ist.

12. Platzierungsverfahren eines Streifenabschnittes, der aus zuvor zusammengesetzten Produkten ausgebildet wird, die ein oder mehrere Profil(e) aus Kautschuk (3, 4, 5) und eine Verstärkungsschicht (2) umfassen, die aus Fasern (21) besteht, die mit Kautschuk ummantelt sind und einen Winkel ($\alpha$) mit der Längsrichtung des Streifens bilden, der gemäß einem Verfahren nach einem der Ansprüche 10 oder 11 geschnitten wird, wobei die Auflagespannung des Streifenabschnittes auf der Montagerolle in Abhängigkeit von einer Solllänge (L) erhöht um den Wert des Längenversatzes (Z) der tatsächlichen Schneidelinie eingestellt wird.

**Claims**

1. Method for cutting to length a strip formed of preassembled products comprising one or more rubber profiled elements (3, 4, 5) superposed in part on a reinforcing ply (2) made up of threads (21) coated in rubber and making an angle ($\alpha$) with the longitudinal direction of the strip, during which method the following steps are performed:

     - a cutting means (6) is run between two threads of the reinforcing ply,

     - the discrepancy between the actual cutting line (A'B'C') and a theoretical cutting line (ABC) is measured, and the point of intersection of the actual cutting line (B') with a reference longitudinal line (XX') placed on the strip is determined,
     - the actual cutting line (B'C') of that part of the rubber profiled elements that are not superposed with the reinforcing ply is longitudinally offset (Z) with respect to the theoretical cutting line (BC) so that the said actual cutting line (B'C') meets the reference longitudinal line (XX') at the point of intersection (B') of the actual cutting line of the reinforcing ply (A'B') with the said reference longitudinal line (XX'), and the rubber profiled elements that are not superposed with the reinforcing ply are cut along the said actual cutting line.

2. Method according to Claim 1, in which, prior to cutting, the strip is positioned in the frame of reference of the cutting device so that the reference longitudinal line (XX') of the strip is arranged at a known location.

3. Method according to either of Claims 1 and 2, in which, in order to cut the reinforcing ply, use is made of a cutting means (6) able to assess the position of the cutting line.

4. Method according to Claim 3, in which the means of cutting the reinforcing ply comprises a cutting wheel of circular shape (60) that can be oriented according to the angle formed by the threads with the longitudinal direction of the strip ($\alpha$) and which is free to move in the direction of its axis of rotation (rr').

5. Method according to one of Claims 1 to 4, in which the discrepancy between the actual cutting line (A'B') and the theoretical cutting line (AB) is determined by measuring the distance ($d_1$, $d_2$) between these two lines at at least two distinct points ($P_1$, $P_2$).

6. Method according to one of Claims 1 to 5, in which the cutting means continues to be run between the threads beyond the point of intersection (B') of the actual cutting line (A'B') and of the reference longitudinal line (XX') by a short distance of given value ($\delta$), so as to make it easier to detach the portion of strip after the part of the rubber profiled elements that are not superposed with the reinforcing ply have been cut.

7. Method according to one of Claims 1 to 6, in which in which the cutting line (B'C') of that part of the rubber profiled elements that is not superposed with the reinforcing ply makes an angle with the longitudinal direction equal to the angle ($\alpha$) of the threads of the reinforcing ply (2).

**8.** Method according to one of Claims 1 to 6, in which the cutting line (B'C') of the part of the rubber profiled elements that is not superposed with the reinforcing ply makes an angle with the longitudinal direction that differs from the angle ($\alpha$) of the threads of the reinforcing ply.

**9.** Method according to Claim 8, in which the cutting line of the part of the rubber profiled elements that is not superposed with the reinforcing ply makes a right angle with the longitudinal direction of the strip.

**10.** Method according to one of Claims 1 to 9, in which, prior to cutting, the strip is moved under the cutting means by a given set length (L) so as to form, after cutting, a portion of strip which is intended to be applied by winding to a tyre-building drum of given circumference.

**11.** Method according to Claim 10, in which the set length (L) of the portion of strip is adjusted so that it is equal to the circumference of the tyre-building drum less a maximum given longitudinal offset ($Z_{max}$).

**12.** Method of applying a portion of strip formed of preassembled products comprising one or more rubber profiled elements (3, 4, 5) and a reinforcing ply (2) made up of threads (21) coated in rubber and making an angle ($\alpha$) with the longitudinal direction of the strip cut according to a method according to either of Claims 10 and 11, in which the tension with which the portion of strip is applied to the tyre-building drum is adjusted according to a set length (L) increased by the value of the longitudinal offset (Z) of the actual cutting line.

X'

5

2

21

X

3

4

**Fig 1**

1

51

5

X'

2

21

X

4

3

1

**Fig 2**

X'

B · · · · · · · · · · · · · · · · · C

α

A

X

XX'

2

21

5

4

3

1

**Fig 3**

**Fig 4**

Fig 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4857123 A
- EP 447273 A
- US 5029502 A
- US 6592704 B
- WO 2011076558 A